# EUROPÄISCHE PATENTSCHRIFT

(11) **EP 4 363 355 B1**
(45) Veröffentlichungstag und Bekanntmachung des Hinweises auf die Patenterteilung: **10.12.2025**
(21) Anmeldenummer: 22737708.2
(22) Anmeldetag: 28.06.2022
(51) Int. Cl.: B65G 1/137

(54) **VERBESSERTES VERFAHREN ZUM KOMMISSIONIEREN VON WAREN, WELCHE AUS ZWEI UNTERSCHIEDLICHEN TEILSYSTEMEN STAMMEN, UND LAGER- UND KOMMISSIONIERSYSTEM HIERZU**
IMPROVED METHOD FOR PICKING GOODS THAT COME FROM TWO DIFFERENT SUBSYSTEMS, AND STORAGE AND PICKING SYSTEM THEREFOR
PROCÉDÉ AMÉLIORÉ DE PRÉPARATION DE COMMANDES DE MARCHANDISES PROVENANT DE DEUX SOUS-SYSTÈMES DIFFÉRENTS, ET SYSTÈME DE STOCKAGE ET DE PRÉPARATION DE COMMANDES ASSOCIÉ

(30) Priorität: 30.06.2021 AT 505422021
(43) Veröffentlichungstag der Anmeldung: 08.05.2024
(73) Patentinhaber: TGW Logistics GmbH, 4614 Marchtrenk (AT)
(72) Erfinder: LINDLEY, Timothy, 58239 Schwerte (DE); KETTLGRUBER, Gerald, 4030 Linz (AT)
(74) Vertreter: Burger, Hannes
(86) Internationale Anmeldenummer: PCT/AT2022/060224
(87) Internationale Veröffentlichungsnummer: WO 2023/272322

(56) Entgegenhaltungen:
- WO-A1-2019/241816
- WO-A1-2021/011978
- DE-B3- 102011 104 511

## Beschreibung

Die Erfindung betrifft ein Verfahren zum Kommissionieren von Waren in Auftragsladehilfsmittel in einem Lager- und Kommissioniersystem. Weiterhin betrifft die Erfindung ein Lager- und Kommissioniersystem zur Durchführung des Verfahrens, welches ein erstes Teilsystem, ein zweites Teilsystem, ein erstes Transportsystem, ein zweites Transportsystem, eine erste Kommissionierstation, eine zweite Kommissionierstation, einen Zwischenspeicher, eine Sortiervorrichtung, einen Auftragsrechner und eine Steuervorrichtung aufweist.

Ein solches Verfahren und ein solches Lager- und Kommissioniersystem sind aus dem Stand der Technik grundsätzlich bekannt. Beispielsweise offenbart die US 10,427,873 B1 dazu ein Kommissioniersystem und ein Kommissionierverfahren, bei dem ein Packmuster für einen Auftrag erzeugt wird, das eine Packsequenz definiert. Weiterhin wird unterschieden zwischen Waren, die in einem Beutel transportiert werden können, und Waren, die nicht in einem Beutel transportierbar sind. Erstere werden ausgelagert und an einer Kommissionierstation in einen Beutel gepackt. Die Waren in den Beuteln und die Waren, die nicht in einem Beutel transportierbar sind, werden synchronisiert zu einer Zusammenführungs- und Verpackungsstation transportiert. Dort werden die beide Arten von Waren in eine Versandeinheit umgeladen.

Nachteilig an dem bekannten Kommissioniersystem und Kommissionierverfahren ist, dass eine unglückliche Wahl eines Zeitpunkts, zu dem der Transport der Waren an die Zusammenführungs- und Verpackungsstation ausgelöst wird, sowie schwer einschätzbare oder nicht vorhersehbare Ereignisse auf deren Transportweg zu einer Desynchronisation der Warenströme führen kann. Dies führt zu einer übermäßig langen Belegung der Zusammenführungs- und Verpackungsstation und damit auch unweigerlich auch zu Blockaden auf dem stromaufwärts liegenden Förderweg.

Insbesondere betrifft dies Lager- und Kommissioniersysteme, bei denen Waren aus mehreren Teilsystemen bezogen werden, die nur schwer aufeinander abgestimmt betrieben werden können, beispielsweise aus Teilsystemen unterschiedlicher Hersteller. Weiterhin sind Lager- und Kommissioniersysteme betroffen, bei denen die Latenzzeit von einer Anforderung, eine Ware bereitzustellen, bis zum tatsächlichen Eintreffen der Ware an einer Kommissionierstation schwer vorherbestimmbar ist. Im Besonderen betrifft dies Lager- und Kommissioniersysteme, in denen Waren teilweise erst auftragsbezogen hergestellt werden müssen.

Die WO 2019/241816 A1 betrifft ein Verfahren gemäß dem Oberbegriff des Anspruches 1 sowie ein Lager- und Kommissioniersystem gemäß dem Oberbegriff des Anspruches 12.

Eine Aufgabe der Erfindung ist es daher, ein verbessertes Verfahren zum Kommissionieren von Waren in Auftragsladehilfsmittel sowie ein verbessertes Lager- und Kommissioniersystem anzugeben. Insbesondere soll eine Desynchronisation von Warenströmen an einer Kommissionierstation auch unter schwierigen Bedingungen vermieden werden.

Die Aufgabe der Erfindung wird mit einem Verfahren zum Kommissionieren von Waren in Auftragsladehilfsmittel in einem Lager- und Kommissioniersystem gelöst, das folgende Schritte umfasst:
a) Erfassen einer Vielzahl von Aufträgen und Bestimmen der von dem jeweiligen Auftrag umfassten Waren durch einen Auftragsrechner des Lager- und Kommissioniersystems,
b) Bestimmen eines ersten Auftragsteils, welcher einen ersten Teil der von dem jeweiligen Auftrag umfassten Waren aufweist, die in einem ersten Teilsystem des Lager- und Kommissioniersystems bereitgestellt werden, für jeden Auftrag der erfassten Aufträge durch den Auftragsrechner,
c) Bestimmen eines zweiten Auftragsteils, welcher einen zweiten Teil der von dem jeweiligen Auftrag umfassten Waren aufweist, die in einem zweiten Teilsystem des Lager- und Kommissioniersystems bereitgestellt werden, für jeden Auftrag der erfassten Aufträge durch den Auftragsrechner,
d) (Bereitstellen der Waren des jeweils ersten Auftragsteils und eines dem jeweiligen Auftrag zugeordneten Auftragsladehilfsmittels an einer ersten Kommissionierstation und) Beladen eines dem jeweiligen Auftrag zugeordneten Auftragsladehilfsmittels mit den Waren des jeweils ersten Auftragsteils der Aufträge an einer ersten Kommissionierstation des Lager- und Kommissioniersystems,
e) Transportieren der Auftragsladehilfsmittel von der ersten Kommissionierstation in einen Zwischenspeicher des Lager- und Kommissioniersystems mittels eines ersten Transportsystems des Lager- und Kommissioniersystems,
f) Zwischenspeichern der Auftragsladehilfsmittel im Zwischenspeicher,
g) Abtransportieren der Auftragsladehilfsmittel aus dem Zwischenspeicher und Antransportieren der Auftragsladehilfsmittel zu einer zweiten Kommissionierstation des Lager- und Kommissioniersystems mittels des ersten Transportsystems,
h) Definieren einer Warenzielsequenz, in welcher die Waren der zweiten Auftragsteile der Aufträge an der zweiten Kommissionierstation bereitgestellt werden, durch eine (elektronische) Steuervorrichtung, wobei die Warenzielsequenz eine Auftragszielsequenz vorgibt, in welcher die Aufträge an der zweiten Kommissionierstation bearbeitet werden,
i) Antransportieren der Waren der zweiten Auftragsteile der Aufträge zu einer Sortiervorrichtung des Lager- und Kommissioniersystems mittels des zweiten Transportsystems,
j) Sortieren der Waren der zweiten Auftragsteile der Aufträge in der Sortiervorrichtung gemäß der Warenzielsequenz,
k) Abtransportieren der Waren der zweiten Auftragsteile aus der Sortiervorrichtung und Antransportieren der Waren der zweiten Auftragsteile der Aufträge zur zweiten Kommissionierstation gemäß der Warenzielsequenz mittels des zweiten Transportsystems,
l) Beladen des dem jeweiligen Auftrag zugeordneten Auftragsladehilfsmittels mit den Waren des jeweils zweiten Auftragsteils der Aufträge an der zweiten Kommissionierstation,

wobei die Steuervorrichtung das erste Transportsystem ansteuert und das erste Transportsystem die Auftragsladehilfsmittel gemäß der vorgegebenen Auftragszielsequenz transportiert, um das Antransportieren gemäß Schritt g) durchzuführen, und
wobei die Steuervorrichtung einen Startzeitpunkt für das Abtransportieren gemäß Schritt g) berechnet, bevor die Waren der zweiten Auftragsteile der Aufträge gemäß der Warenzielsequenz sortiert werden, und das erste Transportsystem ansteuert, um das Abtransportieren gemäß Schritt g) zum Startzeitpunkt auszulösen.

Weiterhin wird die Aufgabe der Erfindung durch ein Lager- und Kommissioniersystem zum Kommissionieren von Waren in Auftragsladehilfsmittel gelöst, umfassend
ein erstes Teilsystem, in dem Waren bereitstellbar sind,
ein zweites Teilsystem, in dem Waren bereitstellbar sind,
einen Auftragsrechner
   i) zum Erfassen einer Vielzahl von Aufträgen und Bestimmen der von dem jeweiligen Auftrag umfassten Waren,
   ii) zum Bestimmen eines ersten Auftragsteils, welcher einen ersten Teil der von dem jeweiligen Auftrag umfassten Waren aufweist, die im ersten Teilsystem des Lager- und Kommissioniersystems bereitgestellt werden, für jeden Auftrag der erfassten Aufträge, und
   iii) zum Bestimmen eines zweiten Auftragsteils, welcher einen zweiten Teil der von dem jeweiligen Auftrag umfassten Waren aufweist, die im zweiten Teilsystem des Lager- und Kommissioniersystems bereitgestellt werden, für jeden Auftrag der erfassten Aufträge,
      eine erste Kommissionierstation zum Beladen eines dem jeweiligen Auftrag zugeordneten Auftragsladehilfsmittels mit den Waren des jeweils ersten Auftragsteils der Aufträge,
      eine zweite Kommissionierstation zum Beladen des dem jeweiligen Auftrag zugeordneten Auftragsladehilfsmittels mit den Waren des jeweils zweiten Auftragsteils der Aufträge,
      einen Zwischenspeicher zum Zwischenspeichern (temporären Puffern) der Auftragsladehilfsmittel,
      ein erstes Transportsystem zum Transportieren der Auftragsladehilfsmittel von der ersten Kommissionierstation in den Zwischenspeicher und zum Abtransportieren der Auftragsladehilfsmittel aus dem Zwischenspeicher und Antransportieren der Auftragsladehilfsmittel zu der zweiten Kommissionierstation,
      eine (elektronische) Steuervorrichtung zum Definieren einer Warenzielsequenz, in welcher die Waren der zweiten Auftragsteile der Aufträge an der zweiten Kommissionierstation des Lager- und Kommissioniersystems bereitgestellt werden, wobei die Warenzielsequenz eine Auftragszielsequenz vorgibt, in welcher die Aufträge an der zweiten Kommissionierstation bearbeitet werden,
      eine Sortiervorrichtung zum Sortieren der Waren der zweiten Auftragsteile der Aufträge gemäß der Warenzielsequenz,
      ein zweites Transportsystem zum Antransportieren der Waren der zweiten Auftragsteile der Aufträge zur Sortiervorrichtung und zum Abtransportieren der Waren der zweiten Auftragsteile aus der Sortiervorrichtung und Antransportieren der Waren der zweiten Auftragsteile der Aufträge zur zweiten Kommissionierstation gemäß der Warenzielsequenz, wobei die Steuervorrichtung ferner dazu eingerichtet ist,
      das erste Transportsystem für einen Transport der Auftragsladehilfsmittel gemäß der vorgegebenen Auftragszielsequenz anzusteuern, und
      einen Startzeitpunkt für das Abtransportieren der Auftragsladehilfsmittel aus dem Zwischenspeicher zu berechnen, bevor die Waren der zweiten Auftragsteile der Aufträge gemäß der Warenzielsequenz sortiert werden, und das erste Transportsystem anzusteuern, um das Abtransportieren der Auftragsladehilfsmittel aus dem Zwischenspeicher zum Startzeitpunkt auszulösen.

Durch die vorgeschlagenen Maßnahmen wird eine Desynchronisation von Warenströmen an einer Kommissionierstation auch unter schwierigen Bedingungen vermieden. Die vorgeschlagenen Maßnahmen eignen sich somit insbesondere für Lager- und Kommissioniersysteme, bei denen Waren aus mehreren Teilsystemen bezogen werden, die nur schwer aufeinander abgestimmt betrieben werden können, beispielsweise aus Teilsystemen unterschiedlicher Hersteller. Zudem eignen sich die vorgeschlagenen Maßnahmen im Besonderen für Lager- und Kommissioniersysteme, bei denen die Latenzzeit von einer Anforderung, eine Ware bereitzustellen, bis zum tatsächlichen Eintreffen der Ware an einer Kommissionierstation schwer vorherbestimmbar ist.

Die Steuervorrichtung ist dazu eingerichtet, den Startzeitpunkt zu berechnen und das erste Transportsystem derart anzusteuern, dass das Abtransportieren zum Startzeitpunkt ausgelöst bzw. gestartet wird. Hierfür kann die Steuervorrichtung das Transportsystem zeitlich vor dem Startzeitpunkt ansteuern, wobei das Abtransportieren zum Startzeitpunkt beginnt. Alternativ kann die Steuervorrichtung das Transportsystem zum Startzeitpunkt ansteuern, um das Abtransportieren unmittelbar zu starten.

Bevorzugt berechnet die Steuervorrichtung den Startzeitpunkt, sodass die Auftragsladehilfsmittel durch das erste Transportsystem und die Waren durch das zweite Transportsystem im Wesentlichen gleichzeitig (synchronisiert) an der zweiten Kommissionierstation bereitgestellt werden. Hierbei kann von der Steuervorrichtung eine Transportzeit berücksichtigt werden, welche benötigt wird, um die Auftragsladehilfsmittel von dem Zwischenspeicher zur zweiten Kommissionierstation zu transportieren. Ferner kann von der Steuervorrichtung hierbei eine Transportzeit berücksichtigt werden, welche benötigt wird, um die Waren des zweiten Auftragsteils zur zweiten Kommissionierstation zu transportieren. Die jeweiligen Transportzeiten können ebenfalls durch die Steuervorrichtung berechnet werden.

Das erste Teilsystem des Lager- und Kommissioniersystems kann insbesondere durch ein Warenlager gebildet sein oder ein solches umfassen, wobei die Waren des ersten Auftragsteils in diesem Warenlager bereitgestellt und auftragsbezogen aus diesem Warenlager ausgelagert werden beziehungsweise auslagerbar sind. Das erste Teilsystem eignet sich somit insbesondere zum Bereitstellen an sich versandfertiger Ware (also Waren, die keiner weiteren Bearbeitung bedürfen).

Das zweite Teilsystem des Lager- und Kommissioniersystems kann insbesondere durch eine Produktion gebildet sein oder eine solche umfassen, wobei die Waren des zweiten Auftragsteils in dieser Produktion auftragsbezogen hergestellt werden. Das heißt, die Produktion ist in diesem Fall dazu eingerichtet, die Waren des zweiten Auftragsteils auftragsbezogen herzustellen. Insbesondere kann diese für die Herstellung von Büchern, Schuhen oder Kleidungsstücken eingerichtet sein. Generell kann die Produktion auch das Individualisieren vorgefertigter Waren betreffen (Mehrwertdienst bzw. "Value Added Service"). Beispielsweise können Kleidungsstücke oder Schuhe bedruckt oder bestickt werden. Denkbar ist auch, dass Bücher auftragsbezogen gedruckt und gebunden werden.

Vorteilhaft sind die Auftragsladehilfsmittel unterschiedlich zu einer Hängetasche ausgebildet. Insbesondere kann das Auftragsladehilfsmittel als Behälter, Karton, Versandpackung (Versandkarton, Versandtasche), etc. ausgebildet sein. Demgemäß umfasst das erste Transportsystem in diesem Fall eine zu einer Hängefördertechnik unterschiedliche Fördertechnik. Diese Fördertechnik kann beispielsweise als stationäre (bodengebundene) Fördertechnik, insbesondere als Rollenfördertechnik oder Gurtfördertechnik, ausgebildet sein. Alternativ kann die erste Fördertechnik als mobile Fördertechnik ausgebildet sein, beispielsweise umfassend "Automated guided vehicles" (kurz: AGV) oder "Autonomous mobile robots" (kurz: AMR).

Das zweite Transportsystem umfasst vorzugsweise eine Hängefördertechnik zum hängenden Transport von Hängetaschen, in welchen die Waren des zweiten Auftragsteils transportiert werden. Vorzugsweise wird in je einer Hängetasche je eine Ware des zweiten Auftragsteils transportiert. Werden gleichzeitig mehrere Waren mit einem Transportträger oder einer Hängetasche transportiert, so handelt es sich vorwiegend um Waren derselben Warentype. Insbesondere kann eine Hängetasche gemäß der Patentanmeldung WO 2019/195871 A1 oder WO 2020/150762 A1 ausgebildet sein und in der dort beschriebenen Weise für das hier offenbarte Verfahren und das hier offenbarte Lager- und Kommissioniersystem verwendet werden. Wenngleich der Transport der Waren des zweiten Auftragsteils in Hängetaschen von Vorteil ist, so ist dennoch auch eine Verwendung anderer Ladehilfsmittel für die Waren des zweiten Auftragsteils vorstellbar.

An der ersten Kommissionierstation kann das Auftragsladehilfsmittel mit Waren, welche an dieser bereitgestellt werden, beladen werden.

Die erste Kommissionierstation ist beispielsweise als automatische Kommissionierstation, insbesondere umfassend einen Kommissionierroboter, ausgebildet.

Alternativ ist die erste Kommissionierstation als manuelle Kommissionierstation ausgebildet. Die manuelle Kommissionierstation kann eine Ein- und/oder Ausgabevorrichtung umfassen. Bevorzugt weist die Ein- und/oder Ausgabevorrichtung ein Ausgabemittel zur Ausgabe von Kommissionieranweisungen auf, beispielsweise einen Bildschirm, an welchem die Bedienperson Kommissionieranweisungen erhält. Ferner kann die Ein- und/oder Ausgabevorrichtung ein Eingabemittel zur Eingabe eines Quittierbefehls aufweisen, beispielsweise eine Tastatur oder eine Taste, über welches die Bedienperson den erfolgten Kommissioniervorgang quittieren (bestätigen) kann. Das Eingabemittel und Ausgabemittel können beispielsweise durch ein Touch-Display bereitgestellt sein.

An der zweiten Kommissionierstation kann das Auftragsladehilfsmittel mit Waren, welche durch das zweite Transportsystem an dieser bereitgestellt werden, beladen werden.

Werden die Waren beispielsweise mit Hängetaschen an der zweiten Kommissionierstation bereitgestellt, kann das Beladen des Auftragsladehilfsmittels ein Umladen der Waren aus der Hängetasche in das Auftragsladehilfsmittel umfassen.

Die zweite Kommissionierstation ist beispielsweise als automatische Kommissionierstation, insbesondere umfassend einen Kommissionierroboter, ausgebildet.

Alternativ ist die zweite Kommissionierstation als manuelle Kommissionierstation ausgebildet. Die manuelle Kommissionierstation kann eine Ein- und/oder Ausgabevorrichtung umfassen. Bevorzugt weist die Ein- und/oder Ausgabevorrichtung ein Ausgabemittel zur Ausgabe von Kommissionieranweisungen auf, beispielsweise einen Bildschirm, an welchem die Bedienperson Kommissionieranweisungen erhält. Die Kommissionieranweisungen können hierbei eine Anweisung zum Entnehmen einer Ware aus einer Hängetasche und/oder zum Ablegen der Ware im Auftragsladehilfsmittel umfassen, wenn die Ware mit einer Hängetasche an der zweiten Kommissionierstation bereitgestellt wird. Ferner kann die Ein- und/oder Ausgabevorrichtung ein Eingabemittel zur Eingabe eines Quittierbefehls aufweisen, beispielsweise eine Tastatur oder eine Taste, über welches die Bedienperson den erfolgten Kommissioniervorgang quittieren (bestätigen) kann. Das Eingabemittel und Ausgabemittel können beispielsweise durch ein Touch-Display bereitgestellt sein.

Der Zwischenspeicher umfasst Pufferplätze, auf welchen die Auftragsladehilfsmittel zwischengespeichert werden können.

Wenn das zweite Transportsystem eine Hängefördertechnik umfasst, kann die Sortiervorrichtung mit Vorteil als Matrix-Sorter ausgebildet sein.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der zweite Auftragsteil einer zweiten Kommissionierstation von mehreren zweiten Kommissionierstationen zugeteilt wird und diese Zuteilung als Vorgabe für den ersten Auftragsteil herangezogen wird. Dadurch gelingt die Synchronisierung des Antransports der Auftragsladehilfsmittel und der Waren der zweiten Auftragsteile auch bei mehreren zweiten Kommissionierstationen. Dabei kann die genannte Zuteilung
zufällig erfolgen,
auf Basis eines an der zweiten Kommissionierstation bereits bereitgestellten Versandladehilfsmittels erfolgen, in welches die vom jeweiligen Auftrag umfassten Waren (mit oder ohne zweites Auftragsladhilfsmittel) umgeladen werden,
auf Basis einer Auftragspriorisierung erfolgen, wobei mehrere gesammelte Aufträge in einer bestimmten Reihenfolge oder zu bestimmten Zeitpunkten an der zweiten Kommissionierstation abgearbeitet werden (Schritt 1),
auf Basis einer Bauart der zweiten Kommissionierstationen erfolgen, wobei insbesondere jene zweite Kommissionierstation gewählt wird, welche sich am besten für die Ausführung des Schritts 1) eignet, und/oder
auf Basis einer Auslastung der zweiten Kommissionierstationen erfolgen, wobei die Waren der ersten Auftragsteile und die Waren der zweiten Auftragsteile mehrerer Aufträge vorzugsweise gleichmäßig auf die vorhandenen zweiten Kommissionierstationen aufgeteilt werden.

Erfolgt die Zuteilung auf Basis einer Auslastung, dann kann sichergestellt werden, dass einzelne Lagerarbeiter (Kommissionierpersonen) an den zweiten Kommissionierstationen nicht überlastet und durch die Aufteilung der ersten und zweiten Auftragsteile auch nicht einseitig belastet werden.

Auch eine zufällige Zuteilung bewirkt über einen hinreichend langen Zeitraum eine gleichmäßige Auslastung der zweiten Kommissionierstationen, jedoch ohne dass die Einhaltung derselben gemessen beziehungsweise kontrolliert werden muss.

Denkbar wäre auch, dass ein Versandladehilfsmittel mit Waren mehrerer Aufträge, jeweils mit oder ohne Auftragsladhilfsmittel, beladen wird. Beispielsweise kann eine Palette (Versandladehilfsmittel) mit Auftragsladehilfsmitteln mehrerer Aufträge beladen werden, welche in Folge gemeinsam versandt werden.

Im Falle einer Zuteilung auf Basis einer Bauart der zweiten Kommissionierstationen, kann zum Beispiel berücksichtigt werden, ob sich ein Kommissionierroboter an einer bestimmten zweiten Kommissionierstation besser für die Kommissionierung der Waren des zweiten Auftragsteils eignet als ein anderer Kommissionierroboter an einer anderen zweiten Kommissionierstation.

Im Falle einer Zuteilung auf Basis einer Auftragspriorisierung, können bestimmte zweite Kommissionierstationen für Eilaufträge freigehalten oder mit geringer Auslastung betrieben werden. Langt ein solcher Eilauftrag ein, können die Waren dieses Auftrags an einer solchen zweiten Kommissionierstation bearbeitet bzw. kommissioniert werden.

Von Vorteil ist es weiterhin, wenn ein Auftrag zur Bereitstellung der Waren des zweiten Auftragsteils erteilt wird, wenn der Schritt d) abgeschlossen ist, das heißt wenn das Beladen des Auftragsladehilfsmittels mit den Waren des ersten Auftragsteils an der ersten Kommissionierstation abgeschlossen ist. Dadurch kann sichergestellt werden, dass die Waren des ersten Auftragsteils auf jeden Fall bereitstehen, wenn die Waren des zweiten Auftragsteils bereitgestellt, insbesondere produziert, werden. Dadurch wird eine Überlastung der Sortiervorrichtung mit hoher Sicherheit vermieden, da ein Abtransport der Waren des zweiten Auftragsteils nicht deswegen verzögert werden kann, weil die Waren des ersten Auftragsteils beziehungsweise das Auftragsladehilfsmittels noch nicht bereitstehen.

Günstig ist es, wenn die Waren des zweiten Auftragsteils nach einer Auslagerung oder Produktion in eine Vorsortierstufe der Sortiervorrichtung transportiert und dort vorsortiert werden und anschließend in eine Endsortierstufe der Sortiervorrichtung transportiert und dort sortiert werden, bevor sie zur zweiten Kommissionierstation transportiert werden. Die Endsortierstufe ist dabei insbesondere als Matrix-Sortiervorrichtung ausgebildet. Durch die vorgeschlagenen Maßnahmen gelingt die Sortierung der Waren des zweiten Auftragsteils auf besonders effiziente Weise. Die zweistufige Sortierung ist aber nicht zwingend. Vielmehr können die Waren des zweiten Auftragsteils nach einer Auslagerung oder Produktion, insbesondere unter Umgehung der Vorsortierstufe, direkt in die Endsortierstufe beziehungsweise direkt in die Matrix-Sortiervorrichtung transportiert und in dieser sortiert werden.

Von besonderem Vorteil ist es auch, wenn ein Antransport des Auftragsladhilfsmittels mit den Waren des ersten Auftragsteils zur zweiten Kommissionierstation ausgelöst wird, wenn der Schritt d) abgeschlossen ist (also wenn das Beladen des Auftragsladehilfsmittels mit den Waren des ersten Auftragsteils an der ersten Kommissionierstation abgeschlossen ist) und die Waren des zweiten Auftragsteils in der Vorsortierstufe oder alternativ in der Endsortierstufe vorrätig sind. Dadurch gelingt die Synchronisierung des Antransports der Auftragsladehilfsmittel und der Waren der zweiten Auftragsteile mit hoher Sicherheit.

Vorteilhaft ist es schließlich, wenn die Waren des zweiten Auftragsteils nach einer Auslagerung oder Produktion in einen zwischen dem zweiten Teilsystem und der Vorsortierstufe angeordneten Puffer des Lager- und Kommissioniersystems transportiert werden. Der Puffer dient zum Ausgleichen von Schwankungen im Warenstrom auf dem zweiten Transportsystem. Dadurch wird auch eine verbesserte, gleichmäßige Auslastung der Sortiervorrichtung erreicht.

Zum besseren Verständnis der Erfindung wird diese anhand der nachfolgenden Figur näher erläutert. Es zeigt:

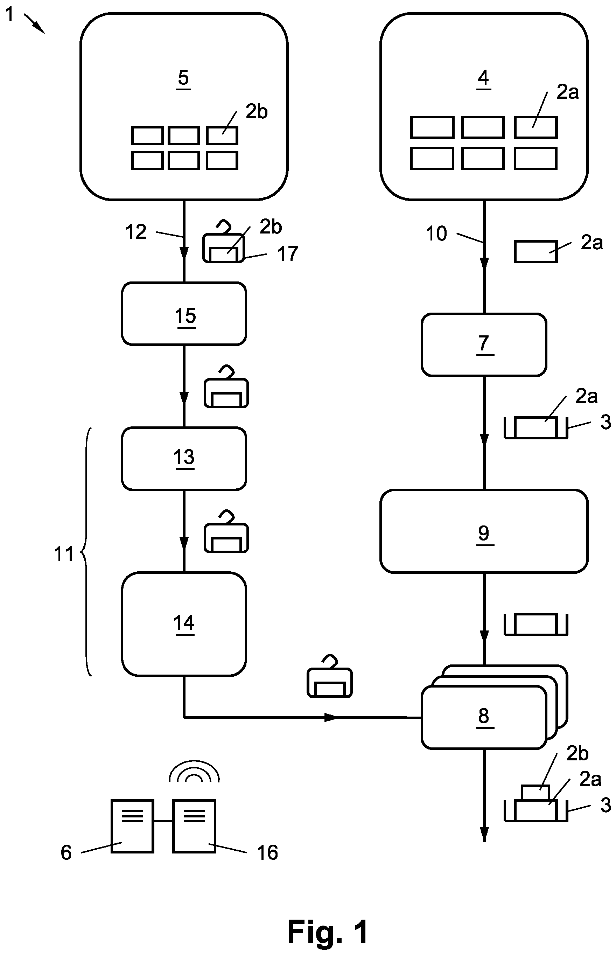

- Fig. 1: ein beispielhaftes Lager- und Kommissioniersystem zum Kommissionieren von Waren in stark vereinfachter, schematischer Darstellung.

Fig. 1 zeigt ein beispielhaftes und schematisch dargestelltes Lager- und Kommissioniersystem 1 zum Kommissionieren von Waren 2a, 2b in Auftragsladehilfsmittel 3. Das Lager- und Kommissioniersystem 1 umfasst ein erstes Teilsystem 4, in dem Waren 2a bereitstellbar sind, und ein zweites Teilsystem 5, in dem ebenfalls Waren 2b bereitstellbar sind.

Darüber hinaus umfasst das Lager- und Kommissioniersystem 1 einen Auftragsrechner 6, der unter anderem zum Erfassen einer Vielzahl von Aufträgen und Bestimmen der von dem jeweiligen Auftrag umfassten Waren 2a, 2b ausgebildet ist.

Zudem weist das Lager- und Kommissioniersystem 1 eine erste Kommissionierstation 7 zum Beladen eines Auftragsladehilfsmittels 3 mit Waren 2a und eine zweite Kommissionierstation 8 zum Beladen des Auftragsladehilfsmittels 3 mit Waren 2b auf, sowie einen Zwischenspeicher 9 zum Zwischenspeichern der Auftragsladehilfsmittel 3. Weiterhin umfasst das Lager- und Kommissioniersystem 1 ein erstes Transportsystem 10 zum Transportieren der Auftragsladehilfsmittel 3 von der ersten Kommissionierstation 7 in den Zwischenspeicher 9 und zum Abtransportieren der Auftragsladehilfsmittel 3 aus dem Zwischenspeicher 9 und Antransportieren der Auftragsladehilfsmittel 3 zu der zweiten Kommissionierstation 8. Das erste Transportsystem 10 ist in diesem Beispiel auch dazu ausgebildet, die Waren 2a zur ersten Kommissionierstation 7 zu transportieren.

Zudem weist das Lager- und Kommissioniersystem 1 eine Sortiervorrichtung 11 zum Sortieren der Waren 2b auf, sowie ein zweites Transportsystem 12 zum Antransportieren der Waren 2b zur Sortiervorrichtung 11 und zum Abtransportieren der Waren 2b aus der Sortiervorrichtung 11 und Antransportieren der Waren 2b zur zweiten Kommissionierstation 8. Die Sortiervorrichtung 11 umfasst in diesem Beispiel eine Vorsortierstufe 13 und eine daran anschließende Endsortierstufe 14, welche insbesondere als Matrix- Sortiervorrichtung ausgebildet ist. Denkbar wäre aber auch, dass die Sortiervorrichtung 11 anders aufgebaut ist und beispielsweise die Vorsortierstufe 13 weggelassen wird. Vor der Vorsortierstufe 13 befindet sich zudem ein optionaler Puffer 15.

Schließlich umfasst das Lager- und Kommissioniersystem 1 eine Steuervorrichtung 16, welche unter anderem zum Definieren einer Warenzielsequenz vorgesehen ist, in welcher die Waren 2b an der zweiten Kommissionierstation 8 bereitgestellt werden.

Wie aus der Fig. 1 erkennbar ist, verbindet das erste Transportsystem 10 das erste Teilsystem 4, die erste Kommissionierstation 7, den Zwischenspeicher 9 und die zweite Kommissionierstation 8. Das zweite Transportsystem 12 verbindet das zweite Teilsystem 5, den Puffer 15, die Vorsortierstufe 13, die Endsortierstufe 14 und die zweite Kommissionierstation 8. Von der zweiten Kommissionierstation 8 führt ebenfalls eine nicht bezeichnete Fördertechnik weg.

Das erste Teilsystem 4 des Lager- und Kommissioniersystems 1 ist in diesem Beispiel durch ein Warenlager zur Bereitstellung der Waren 2a eines ersten Auftragsteils gebildet oder umfasst ein solches. Bereitgestellte Waren 2a sind auftragsbezogen aus diesem Warenlager auslagerbar.

Das zweite Teilsystem 5 des Lager- und Kommissioniersystems 1 ist in diesem Beispiel vorteilhaft durch eine Produktion gebildet oder umfasst eine solche. Die Produktion ist dazu eingerichtet, Waren 2b eines zweiten Auftragsteils auftragsbezogen her- oder fertigzustellen. Insbesondere kann die Produktion für die Herstellung beziehungsweise Individualisierung von Büchern, Schuhen oder Kleidungsstücken eingerichtet sein.

Das zweite Transportsystem 12 umfasst in diesem Beispiel eine Hängefördertechnik zum hängenden Transport von Hängetaschen 17, in welchen Waren 2b eines zweiten Auftragsteils transportiert werden. Vorzugsweise wird in je einer Hängetasche 17 je eine Ware 2b des zweiten Auftragsteils transportiert. Denkbar ist auch, dass die Ware 2b mit einem Kleiderhaken (und damit ohne einer Hängetasche 17) transportiert wird, wobei auch in diesem Fall bevorzugt genau eine Ware 2b mit einem Kleiderhaken transportiert wird. Werden gleichzeitig mehrere Waren 2b mit einem Transportträger oder einer Hängetasche 17 transportiert, so handelt es sich vorwiegend um Waren 2b derselben Warentype. Insbesondere kann eine Hängetasche 17 gemäß der Patentanmeldung WO 2019/195871 A1 oder WO 2020/150762 A1 ausgebildet sein und in der dort beschriebenen Weise für das hier offenbarte Verfahren und das hier offenbarte Lager- und Kommissioniersystem 1 verwendet werden. Wenngleich der Transport der Waren 2b des zweiten Auftragsteils in Hängetaschen 17 von Vorteil ist, so ist dennoch auch eine Verwendung anderer Ladehilfsmittel für die Waren 2b des zweiten Auftragsteils vorstellbar.

Die Auftragsladehilfsmittel 3 sind in diesem Beispiel unterschiedlich zu einer Hängetasche 17 ausgebildet. Insbesondere kann das Auftragsladehilfsmittel 3 als Behälter, Karton, Versandpackung (Versandkarton, Versandtasche), etc. ausgebildet sein. Demgemäß umfasst auch das erste Transportsystem 10 in diesem Beispiel eine zu einer Hängefördertechnik unterschiedliche Fördertechnik. Insbesondere kann das erste Transportsystem 10 als Behälterfördertechnik ausgebildet sein, etwa als bodengebundene Fördertechnik zum liegenden Transport der Waren 2a. Konkret kann das erste Transportsystem 10 daher Rollenförderer oder Gurtförderer aufweisen.

Die Funktion des in Fig. 1 dargestellten Lager- und Kommissioniersystems 1 ist nun wie folgt.

Ein Verfahren zum Kommissionieren von Waren 2a, 2b in Auftragsladehilfsmittel 3 in dem Lager- und Kommissioniersystem 1 umfasst die folgenden Schritte:
a) Erfassen einer Vielzahl von Aufträgen und Bestimmen der von dem jeweiligen Auftrag umfassten Waren 2a, 2b durch den Auftragsrechner 6,
b) Bestimmen eines ersten Auftragsteils, welcher einen ersten Teil der von dem jeweiligen Auftrag umfassten Waren 2a aufweist, die im ersten Teilsystem 4 bereitgestellt werden, für jeden Auftrag der erfassten Aufträge durch den Auftragsrechner 6,
c) Bestimmen eines zweiten Auftragsteils, welcher einen zweiten Teil der von dem jeweiligen Auftrag umfassten Waren 2b aufweist, die im zweiten Teilsystem 5 bereitgestellt werden, für jeden Auftrag der erfassten Aufträge durch den Auftragsrechner 6,
d) Beladen eines dem jeweiligen Auftrag zugeordneten Auftragsladehilfsmittels 3 mit den Waren 2a des jeweils ersten Auftragsteils der Aufträge an der ersten Kommissionierstation 7,
e) Transportieren der Auftragsladehilfsmittel 3 von der ersten Kommissionierstation 7 in den Zwischenspeicher 9 mit dem ersten Transportsystems 10,
f) Zwischenspeichern der Auftragsladehilfsmittel 3 im Zwischenspeicher 9,
g) Abtransportieren der Auftragsladehilfsmittel 3 aus dem Zwischenspeicher 9 und Antransportieren der Auftragsladehilfsmittel 3 zur zweiten Kommissionierstation 8 mit dem ersten Transportsystems 10,
h) Definieren einer Warenzielsequenz, in welcher die Waren 2b der zweiten Auftragsteile der Aufträge an der zweiten Kommissionierstation 8 bereitgestellt werden, durch die Steuervorrichtung 16, wobei die Warenzielsequenz eine Auftragszielsequenz vorgibt, in welcher die Aufträge an der zweiten Kommissionierstation 8 bearbeitet werden,
i) Antransportieren der Waren 2b der zweiten Auftragsteile der Aufträge zur Sortiervorrichtung 11 mit dem zweiten Transportsystems 12,
j) Sortieren der Waren 2b der zweiten Auftragsteile der Aufträge in der Sortiervorrichtung 11 gemäß der Warenzielsequenz,
k) Abtransportieren der Waren 2b der zweiten Auftragsteile aus der Sortiervorrichtung 11 und Antransportieren der Waren 2b der zweiten Auftragsteile der Aufträge zur zweiten Kommissionierstation 8 gemäß der Warenzielsequenz mit dem zweiten Transportsystem 12, und 1) Beladen des dem jeweiligen Auftrag zugeordneten Auftragsladehilfsmittels 3 mit den Waren 2b des jeweils zweiten Auftragsteils der Aufträge an der zweiten Kommissionierstation 8.

Das erste Transportsystem 10 transportiert die Auftragsladehilfsmittel 3 dabei angesteuert durch die Steuervorrichtung 16 gemäß der vorgegebenen Auftragszielsequenz, um das Antransportieren gemäß Schritt g) durchzuführen.

Weiterhin berechnet die Steuervorrichtung 16 dabei einen Startzeitpunkt für das Abtransportieren gemäß Schritt g), bevor die Waren 2b der zweiten Auftragsteile der Aufträge gemäß der Warenzielsequenz sortiert werden, und steuert das erste Transportsystem 10 an, um das Abtransportieren gemäß Schritt g) zum Startzeitpunkt auszulösen.

Langt ein Auftrag im Lager- und Kommissioniersystem 1 ein, so wird also bestimmt, welche Waren 2a im ersten Teilsystem 4 (Warenlager) bereitgestellt werden und welche Waren 2b im zweiten Teilsystem 5 (Produktion) bereitgestellt werden. Die Waren 2a werden sodann vom ersten Teilsystem 4 in den Zwischenspeicher 9 transportiert und dort zwischengespeichert.

Ebenso werden die Waren 2b vom zweiten Teilsystem 5 in den Puffer 15 gefördert. Der Puffer 15 dient zum Ausgleichen von Schwankungen im Warenstrom auf dem zweiten Transportsystem 12 und muss nicht zwingend vorgesehen werden. Von dort gelangen die Waren 2b in die Vorsortierstufe 13 und anschließend in die Endsortierstufe 14. In der Sortiervorrichtung 11 werden die Waren 2b gemäß einer Warenzielsequenz sortiert, welche durch die Steuervorrichtung 16 definiert wird.

Die Warenzielsequenz gibt vor, in welcher Reihenfolge die Waren 2b an der zweiten Kommissionierstation 8 bereitgestellt werden. Die Warenzielsequenz gibt auch eine Auftragszielsequenz vor, in welcher die Aufträge an der zweiten Kommissionierstation 8 bearbeitet werden.

An der zweiten Kommissionierstation 8 werden die Auftragsladehilfsmittel 3 mit den Waren 2b des jeweils zweiten Auftragsteils beladen. Dazu muss das Auftragsladehilfsmittel 3 zuvor aus dem Zwischenspeicher 9 antransportiert werden.

Um das Eintreffen der Auftragsladehilfsmittel 3 und der Waren 2b der zweiten Auftragsteile an der zweiten Kommissionierstation 8 zu synchronisieren, wird von der Steuervorrichtung 16 ein Startzeitpunkt für das Abtransportieren der Auftragsladehilfsmittel 3 aus dem Zwischenspeicher 9 berechnet. Weiterhin steuert die Steuervorrichtung 16 das erste Transportsystem 10 an, um das erwähnte Abtransportieren zum Startzeitpunkt auszulösen. Die Berechnung des besagten Startzeitpunkts erfolgt dabei, bevor die Waren 2b der zweiten Auftragsteile gemäß der Warenzielsequenz sortiert werden. Mit Hilfe der vorgeschlagenen Maßnahmen wird sichergestellt, dass die Auftragsladehilfsmittel 3 zu einem gewünschten Zeitpunkt und in einer gewünschten Reihenfolge an der zweiten Kommissionierstation 8 eintreffen.

Durch die Synchronisation und vorausschauende Berechnung eines Startzeitpunkts und einer Auftragszielsequenz werden Unregelmäßigkeiten im Ablauf des Kommissionierverfahrens, insbesondere Warenstaus auf dem ersten Teilsystem 4 und auf dem zweiten Teilsystem 5 sowie Überlastungen des Zwischenspeichers 9, des Puffers 15, der Vorsortierstufe 13 und der Endsortierstufe 14 (also der Sortiervorrichtung 11) vermieden. Vorteilhaft werden dadurch insbesondere Unsicherheiten bei Zeitplanung für die Produktion der Waren 2b berücksichtigt. Das heißt, Warenstaus und Überlastungen werden vermieden, obwohl die Zeit für die Bereitstellung der Waren 2b der zweiten Auftragsteile nicht exakt vorherbestimmbar ist (im Gegensatz zu dem relativ genau bekannten Zeitbedarf für die Bereitstellung der Waren 2a der ersten Auftragsteile).

Vorteilhaft ist es, wenn ein Auftrag zur Bereitstellung der Waren 2b des zweiten Auftragsteils erteilt wird, wenn der Schritt d) abgeschlossen ist, das heißt, wenn das Beladen des Auftragsladehilfsmittels 3 mit den Waren 2a des ersten Auftragsteils an der ersten Kommissionierstation 7 abgeschlossen ist. Dadurch kann sichergestellt werden, dass die Waren 2a des ersten Auftragsteils auf jeden Fall bereitstehen, wenn die Waren 2b des zweiten Auftragsteils bereitgestellt, insbesondere produziert, werden. Dadurch wird eine Überlastung der Sortiervorrichtung 11 mit hoher Sicherheit vermieden, da ein Abtransport der Waren 2b des zweiten Auftragsteils nicht deswegen verzögert werden kann, weil die Waren 2a des ersten Auftragsteils beziehungsweise das Auftragsladehilfsmittel 3 noch nicht bereitstehen.

Von besonderem Vorteil ist es, wenn ein Antransport des Auftragsladehilfsmittels 3 mit den Waren 2a des ersten Auftragsteils zur zweiten Kommissionierstation 8 ausgelöst wird, wenn der Schritt d) abgeschlossen ist (also wenn das Beladen des Auftragsladehilfsmittels 3 mit den Waren 2a des ersten Auftragsteils an der ersten Kommissionierstation 7 abgeschlossen ist) und die Waren 2b des zweiten Auftragsteils in der Vorsortierstufe 13 oder alternativ in der Endsortierstufe 14 vorrätig sind. Dadurch gelingt die Synchronisierung des Antransports der Auftragsladehilfsmittel 3 und der Waren 2b der zweiten Auftragsteile mit hoher Sicherheit.

In einer Ausführungsvariante des vorgestellten Verfahrens wird der zweite Auftragsteil einer zweiten Kommissionierstation 8 von mehreren zweiten Kommissionierstationen 8 zugeteilt, wobei diese Zuteilung als Vorgabe für den ersten Auftragsteil herangezogen wird. Dadurch gelingt die Synchronisierung des Antransports der Auftragsladehilfsmittel 3 und der Waren 2b der zweiten Auftragsteile auch bei mehreren zweiten Kommissionierstationen 8.

Nachfolgend werden ergänzend einige Beispiele für eine Warenzielsequenz und eine Auftragszielsequenz angegeben. Insbesondere, wenn mehrere Aufträge jeweils mehrere Waren 2b zweiter Auftragsteile aufweisen, können die Auftragszielsequenz und die Warenzielsequenz voneinander abweichen. In einem Beispiel liegen die Aufträge 1, 2 und 3 vor, welche Waren 2b der Warentypen A, B, C und D betreffen.

| Auftrag | Warentype |
|---|---|
| 1 | A |
| 1 | B |
| 1 | C |
| 2 | A |
| 2 | B |
| 2 | C |
| 3 | D |
| 3 | C |

Ein beispielhaftes Paar von Warenzielsequenz und Auftragszielsequenz kann daher lauten: Warenzielsequenz = ABC ABC DC Auftragszielsequenz = 123. Zur selben Warenzielsequenz = ABC ABC DC wäre aber auch die Auftragszielsequenz = 213 möglich, wohingegen das Paar Warenzielsequenz = DC ABC ABC zur Auftragszielsequenz = 312 oder 321 führt.

Abschließend wird festgehalten, dass der Schutzbereich durch die Patentansprüche bestimmt ist.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Lager- und Kommissioniersystem
- 2a, 2b: Ware
- 3: Auftragsladehilfsmittel
- 4: erstes Teilsystem (Warenlager)
- 5: zweites Teilsystem (Produktion)

- 6: Auftragsrechner
- 7: erste Kommissionierstation
- 8: zweite Kommissionierstation
- 9: Zwischenspeicher
- 10: erstes Transportsystem (Behälterfördertechnik)

- 11: Sortiervorrichtung
- 12: zweites Transportsystem (Hängefördertechnik)
- 13: Vorsortierstufe
- 14: Endsortierstufe (Matrix-Sortiervorrichtung)
- 15: Puffer
- 16: Steuervorrichtung
- 17: Hängetasche

## Patentansprüche

1. Verfahren zum Kommissionieren von Waren (2a, 2b) in Auftragsladehilfsmittel (3) in einem Lager- und Kommissioniersystem (1), umfassend die Schritte:
a) Erfassen einer Vielzahl von Aufträgen und Bestimmen der von dem jeweiligen Auftrag umfassten Waren (2a, 2b) durch einen Auftragsrechner (6),
b) Bestimmen eines ersten Auftragsteils, welcher einen ersten Teil der von dem jeweiligen Auftrag umfassten Waren (2a) aufweist, die in einem ersten Teilsystem (4) bereitgestellt werden, für jeden Auftrag der erfassten Aufträge durch den Auftragsrechner (6),
c) Bestimmen eines zweiten Auftragsteils, welcher einen zweiten Teil der von dem jeweiligen Auftrag umfassten Waren (2b) aufweist, die in einem zweiten Teilsystem (5) bereitgestellt werden, für jeden Auftrag der erfassten Aufträge durch den Auftragsrechner (6),
d) Beladen eines dem jeweiligen Auftrag zugeordneten Auftragsladehilfsmittels (3) mit den Waren (2a) des jeweils ersten Auftragsteils der Aufträge an einer ersten Kommissionierstation (7),
e) Transportieren der Auftragsladehilfsmittel (3) von der ersten Kommissionierstation (7) in einen Zwischenspeicher (9) mittels eines ersten Transportsystems (10),
f) Zwischenspeichern der Auftragsladehilfsmittel (3) im Zwischenspeicher (9),
g) Abtransportieren der Auftragsladehilfsmittel (3) aus dem Zwischenspeicher (9) und Antransportieren der Auftragsladehilfsmittel (3) zu einer zweiten Kommissionierstation (8) mittels des ersten Transportsystems (10),
h) Definieren einer Warenzielsequenz, in welcher die Waren (2b) der zweiten Auftragsteile der Aufträge an der zweiten Kommissionierstation (8) bereitgestellt werden, durch eine Steuervorrichtung (16), wobei die Warenzielsequenz eine Auftragszielsequenz vorgibt, in welcher die Aufträge an der zweiten Kommissionierstation (8) bearbeitet werden,
i) Antransportieren der Waren (2b) der zweiten Auftragsteile der Aufträge zu einer Sortiervorrichtung (11) mittels des zweiten Transportsystems (12),
j) Sortieren der Waren (2b) der zweiten Auftragsteile der Aufträge in der Sortiervorrichtung (11) gemäß der Warenzielsequenz,
k) Abtransportieren der Waren (2b) der zweiten Auftragsteile aus der Sortiervorrichtung (11) und Antransportieren der Waren (2b) der zweiten Auftragsteile der Aufträge zur zweiten Kommissionierstation (8) gemäß der Warenzielsequenz, mittels des zweiten Transportsystems (12),
**gekennzeichnet durch** den Schritt:
1) Beladen des dem jeweiligen Auftrag zugeordneten Auftragsladehilfsmittels (3) mit den Waren (2b) des jeweils zweiten Auftragsteils der Aufträge an der zweiten Kommissionierstation (8),
wobei die Steuervorrichtung (16) das erste Transportsystem (10) ansteuert und das erste Transportsystem (10) die Auftragsladehilfsmittel (3) gemäß der vorgegebenen Auftragszielsequenz transportiert, um das Antransportieren gemäß Schritt g) durchzuführen, und
wobei die Steuervorrichtung (16) einen Startzeitpunkt für das Abtransportieren gemäß Schritt g) berechnet, bevor die Waren (2b) der zweiten Auftragsteile der Aufträge gemäß der Warenzielsequenz sortiert werden, und das erste Transportsystem (10) ansteuert, um das Abtransportieren gemäß Schritt g) zum Startzeitpunkt auszulösen.

2. Verfahren nach Anspruch 1, **dadurch gekennzeichnet, dass** der zweite Auftragsteil einer zweiten Kommissionierstation (8) von mehreren zweiten Kommissionierstationen (8) zugeteilt wird und diese Zuteilung als Vorgabe für den ersten Auftragsteil herangezogen wird.

3. Verfahren nach Anspruch 1 oder 2, **dadurch gekennzeichnet, dass** ein Auftrag zur Bereitstellung der Waren (2b) des zweiten Auftragsteils erteilt wird, wenn der Schritt d) abgeschlossen ist.

4. Verfahren nach einem der Ansprüche 1 bis 3, **dadurch gekennzeichnet, dass** das erste Teilsystem (4) des Lager- und Kommissioniersystems (1) durch ein Warenlager gebildet ist oder ein solches umfasst und die Waren (2a) des ersten Auftragsteils in diesem Warenlager bereitgestellt und auftragsbezogen aus diesem Warenlager ausgelagert werden.

5. Verfahren nach einem der Ansprüche 1 bis 4, **dadurch gekennzeichnet, dass** das zweite Teilsystem (5) des Lager- und Kommissioniersystems (1) durch eine Produktion gebildet ist oder eine solche umfasst und die Waren (2b) des zweiten Auftragsteils in dieser Produktion auftragsbezogen hergestellt werden.

6. Verfahren nach einem der Ansprüche 1 bis 5, **dadurch gekennzeichnet, dass** Waren (2b) des zweiten Auftragsteils nach einer Auslagerung oder Produktion in eine Vorsortierstufe (13) der Sortiervorrichtung (11) transportiert und dort vorsortiert werden und anschließend in eine Endsortierstufe (14) der Sortiervorrichtung (11) transportiert und dort sortiert werden, bevor sie zur zweiten Kommissionierstation (8) transportiert werden.

7. Verfahren nach Anspruch 6, **dadurch gekennzeichnet, dass** ein Antransport des Auftragsladhilfsmittels (3) und der Waren (2a) des ersten Auftragsteils zur zweiten Kommissionierstation (8) ausgelöst wird, wenn der Schritt d) abgeschlossen ist und die Waren (2b) des zweiten Auftragsteils in der Vorsortierstufe (13) vorrätig sind oder wenn der Schritt d) abgeschlossen ist und die Waren (2b) des zweiten Auftragsteils in der Endsortierstufe (14) vorrätig sind.

8. Verfahren nach einem der Ansprüche 1 bis 7, **dadurch gekennzeichnet, dass** die Auftragsladehilfsmittel (3) unterschiedlich zu einer Hängetasche (17) ausgebildet sind.

9. Verfahren nach einem der Ansprüche 1 bis 8, **dadurch gekennzeichnet, dass** ein Transport der Waren (2b) des zweiten Auftragsteils mit dem zweiten Transportsystem (12) in Hängetaschen (17) erfolgt.

10. Verfahren nach Anspruch 9, **dadurch gekennzeichnet, dass** in je einer Hängetasche (17) je eine Ware (2b) des zweiten Auftragsteils transportiert wird.

11. Verfahren nach einem der Ansprüche 6 bis 10, **dadurch gekennzeichnet, dass** die Waren (2b) des zweiten Auftragsteils nach einer Auslagerung oder Produktion in einen zwischen dem zweiten Teilsystem (5) und der Vorsortierstufe (13) angeordneten Puffer (15) des Lager- und Kommissioniersystems (1) transportiert werden.

12. Lager- und Kommissioniersystem (1) zum Kommissionieren von Waren (2a, 2b) in Auftragsladehilfsmittel (3), umfassend
ein erstes Teilsystem (4), in dem Waren (2a) bereitstellbar sind,
ein zweites Teilsystem (5), in dem Waren (2b) bereitstellbar sind,
einen Auftragsrechner (6)
i) zum Erfassen einer Vielzahl von Aufträgen und Bestimmen der von dem jeweiligen Auftrag umfassten Waren (2a, 2b),
ii) zum Bestimmen eines ersten Auftragsteils, welcher einen ersten Teil der von dem jeweiligen Auftrag umfassten Waren (2a) aufweist, die im ersten Teilsystem (4) des Lager- und Kommissioniersystems (1) bereitgestellt werden, für jeden Auftrag der erfassten Aufträge, und
iii) zum Bestimmen eines zweiten Auftragsteils, welcher einen zweiten Teil der von dem jeweiligen Auftrag umfassten Waren (2b) aufweist, die im zweiten Teilsystem (5) des Lager- und Kommissioniersystems (1) bereitgestellt werden, für jeden Auftrag der erfassten Aufträge,
eine erste Kommissionierstation (7) zum Beladen eines dem jeweiligen Auftrag zugeordneten Auftragsladehilfsmittels (3) mit den Waren (2a) des jeweils ersten Auftragsteils der Aufträge,
eine zweite Kommissionierstation (8) zum Beladen des dem jeweiligen Auftrag zugeordneten Auftragsladehilfsmittels (3) mit den Waren (2b) des jeweils zweiten Auftragsteils der Aufträge,
einen Zwischenspeicher (9) zum Zwischenspeichern der Auftragsladehilfsmittel (3),
ein erstes Transportsystem (10) zum Transportieren der Auftragsladehilfsmittel (3) von der ersten Kommissionierstation (7) in den Zwischenspeicher (9) und zum Abtransportieren der Auftragsladehilfsmittel (3) aus dem Zwischenspeicher (9) und Antransportieren der Auftragsladehilfsmittel (3) zu der zweiten Kommissionierstation (8),
eine Steuervorrichtung (16) zum Definieren einer Warenzielsequenz, in welcher die Waren (2b) der zweiten Auftragsteile der Aufträge an der zweiten Kommissionierstation (8) des Lager- und Kommissioniersystems (1) bereitgestellt werden, wobei die Warenzielsequenz eine Auftragszielsequenz vorgibt, in welcher die Aufträge an der zweiten Kommissionierstation (8) bearbeitet werden,
eine Sortiervorrichtung (11) zum Sortieren der Waren (2b) der zweiten Auftragsteile der Aufträge gemäß der Warenzielsequenz,
ein zweites Transportsystem (12) zum Antransportieren der Waren (2b) der zweiten Auftragsteile der Aufträge zur Sortiervorrichtung (11) und zum Abtransportieren der Waren (2b) der zweiten Auftragsteile aus der Sortiervorrichtung (11) und Antransportieren der Waren (2b) der zweiten Auftragsteile der Aufträge zur zweiten Kommissionierstation (8) gemäß der Warenzielsequenz,
**dadurch gekennzeichnet, dass**
die Steuervorrichtung (16) ferner dazu eingerichtet ist,
das erste Transportsystem (10) für einen Transport der Auftragsladehilfsmittel (3) gemäß der vorgegebenen Auftragszielsequenz anzusteuern, und
einen Startzeitpunkt für das Abtransportieren der Auftragsladehilfsmittel (3) aus dem Zwischenspeicher (9) zu berechnen, bevor die Waren (2b) der zweiten Auftragsteile der Aufträge gemäß der Warenzielsequenz sortiert werden, und das erste Transportsystem (10) anzusteuern, um das Abtransportieren der Auftragsladehilfsmittel (3) aus dem Zwischenspeicher (9) zum Startzeitpunkt auszulösen.

13. Lager- und Kommissioniersystem (1) nach Anspruch 12, **dadurch gekennzeichnet, dass** das erste Teilsystem (4) des Lager- und Kommissioniersystems (1) durch ein Warenlager zur Bereitstellung der Waren (2a) des ersten Auftragsteils gebildet ist oder ein solches umfasst, wobei in diesem Warenlager bereitgestellte Waren (2a) auftragsbezogen aus diesem Warenlager auslagerbar sind.

14. Lager- und Kommissioniersystem (1) nach Anspruch 12 oder 13, **dadurch gekennzeichnet, dass** das zweite Teilsystem (5) des Lager- und Kommissioniersystems (1) durch eine Produktion gebildet ist oder eine solche umfasst, wobei die Produktion dazu eingerichtet ist, die Waren (2b) des zweiten Auftragsteils auftragsbezogen herzustellen.

15. Lager- und Kommissioniersystem (1) nach Anspruch 14, **dadurch gekennzeichnet, dass** die Produktion für die Herstellung von Büchern, Schuhen oder Kleidungsstücken eingerichtet ist.

16. Lager- und Kommissioniersystem (1) nach einem der Ansprüche 12 bis 15, **dadurch gekennzeichnet, dass** das erste Transportsystem (10) eine zu einer Hängefördertechnik unterschiedliche Fördertechnik umfasst.

17. Lager- und Kommissioniersystem (1) nach einem der Ansprüche 12 bis 16, **dadurch gekennzeichnet, dass** das zweite Transportsystem (12) eine Hängefördertechnik zum hängenden Transport von Hängetaschen (17) umfasst.

## Claims

1. A method for picking articles (2a, 2b) into an order loading aid (3) in a storage and picking system (1), comprising the following steps:
a) acquisition of a plurality of orders and determination of the articles (2a, 2b) comprised by the respective order by an order-processing computer (6),
b) determination by the order-processing computer (6) of a first order part having a first part of the articles (2a) comprised by the respective order which are provided in a first subsystem (4) for each order of the acquired orders,
c) determination by the order-processing computer (6) of a second order part having a second part of the articles (2b) comprised by the respective order which are provided in a second subsystem (5) for each order of the acquired orders,
d) loading of an order loading aid (3) assigned to the respective order with the articles (2a) of the first order part of the orders on a first picking station (7),
e) transportation of the order loading aid (3) from the first picking station (7) to a temporary storage (9) by means of a first transport system (10),
f) buffering of the order loading aid (3) in the temporary storage (9),
g) retrieval of the order loading aid (3) from the temporary storage (9) and delivery of the order loading aid (3) to a second picking station (8) by means of the first transport system (10),
h) definition by a control device (16) of a target article sequence in which the articles (2b) of the second order parts of the orders are provided at the second picking station (8), wherein the target article sequence specifies a target order sequence in which the orders at the second picking station (8) are processed,
i) delivery of the articles (2b) of the second order parts of the orders to a sorting device (11) by means of the second transport system (12),
j) sorting of the articles (2b) of the second order parts of the orders in the sorting device (11) according to the target article sequence,
k) retrieval of the articles (2b) of the second order parts from the sorting device (11) and delivery of the articles (2b) of the second order parts of the orders to the second picking station (8) according to the target article sequence by means of the second transport system (12),
**characterized by** the step:
1) loading of the articles (2b) of the respective second order part of the orders onto the order loading aid (3) assigned to the respective order at the second picking station (8),
wherein the control device (16) controls the first transport system (10) and the first transport system (10) transports the order loading aids (3) according to the specified target order sequence in order to perform the delivery according to step g), and
wherein the control device (16) calculates a starting time for the retrieval according to step g) before the articles (2b) of the second order parts of the orders are sorted according to the target article sequence, and controls the first transport system (10) to trigger the retrieval according to step g).

2. The method according to claim 1, **characterized in that** the second order part is assigned to one second picking station (8) of a plurality of second picking stations (8) and this assignment is used as a specification for the first order part.

3. The method according to claim 1 or 2, **characterized in that** an order to provide the articles (2b) of the second order part is issued when step d) is completed.

4. The method according to one of claims 1 to 3, **characterized in that** the first subsystem (4) of the storage and picking system (1) is formed by or comprises an article storage and the articles (2a) of the first order part are provided in this article storage and retrieved from this article storage in accordance with the respective order.

5. The method according to one of claims 1 to 4, **characterized in that** the second subsystem (5) of the storage and picking system (1) is formed by or comprises a production and the articles (2b) of the second order part are produced in this production in accordance with the respective order.

6. The method according to one of claims 1 to 5, **characterized in that** after being retrieved from storage or after production, articles (2b) of the second order part are transported into a presorting stage (13) of the sorting device (11) and presorted there and subsequently transported to a final sorting stage (14) of the sorting device (11) and sorted there before being transported to the second picking station (8).

7. The method according to claim 6, **characterized in that** a delivery of the order loading aid (3) and the articles (2a) of the first order part to the second picking station (8) is triggered when step d) is completed and the articles (2b) of the second order part are available in the presorting stage (13) or when step d) is completed and the articles (2b) of the second order part are available in the final sorting stage (14).

8. The method according to one of claims 1 to 7, **characterized in that** the order loading aids (3) are configured differently to a hanging bag (17).

9. The method according to one of claims 1 to 8, **characterized in that** the articles (2b) of the second order part are transported by the second transport system (12) in hanging bags (17).

10. The method according to claim 9, **characterized in that** each article (2b) of the second order part is transported in one hanging bag (17).

11. The method according to one of claims 6 to 10, **characterized in that** after being retrieved from storage or after production, the articles (2b) of the second order part are transported to a buffer (15) of the storage and picking system (1) arranged between the second subsystem (5) and the presorting stage (13).

12. A storage and picking system (1) for picking articles (2a, 2b) into order loading aids (3), comprising
a first subsystem (4) in which articles (2a) can be provided,
a second subsystem (5) in which articles (2b) can be provided,
an order-processing computer (6)
i) for the acquisition of a plurality of orders and determination of the articles (2a, 2b) comprised by the respective order,
ii) for the determination of a first order part having a first part of the articles (2a) comprised by the respective order which are provided in the first subsystem (4) of the storage and picking system (1) for each order of the acquired orders, and
iii) for the determination of a second order part having a second part of the articles (2b) comprised by the respective order which are provided in the second subsystem (5) of the storage and picking system (1) for each order of the acquired orders, a first picking station (7) for the loading of an order loading aid (3) assigned to the respective order with the articles (2a) of the first order part of the orders,
a second picking station (8) for the loading of the order loading aid (3) assigned to the respective order with the articles (2b) of the second order part of the orders, a temporary storage (9) for buffering the order loading aids (3),
a first transport system (10) for the transportation of the order loading aid (3) from the first picking station (7) to the temporary storage (9) and for the retrieval of the order loading aid (3) from the temporary storage (9) and delivery of the order loading aid (3) to a second picking station (8),
a control device (16) for the definition of a target article sequence in which the articles (2b) of the second order parts of the orders are provided at the second picking station (8) of the storage and picking system (1), wherein the target article sequence specifies a target order sequence in which the orders at the second picking station (8) are processed, a sorting device (11) for sorting the articles (2b) of the second order parts of the orders according to the target article sequence,
a second transport system (12) for the delivery of the articles (2b) of the second order parts of the orders to the sorting device (11) and for the retrieval of the articles (2b) of the second order parts from the sorting device (11) and for the delivery of the articles (2b) of the second order parts of the order to the second picking station (8) according to the target article sequence,
**characterized in that**
the control device (16) is further configured
to control the first transport system (10) to transport the order loading aids (3) according to the specified target order sequence, and
to calculate a starting time for the retrieval of the order loading aids (3) from the temporary storage (9) before the articles (2b) of the second order parts of the orders are sorted according to the target article sequence, and to control the first transport system (10) to trigger the retrieval of the order loading aids (3) from the temporary storage (9) at the start time.

13. The storage and picking system (1) according to claim 12, **characterized in that** the first subsystem (4) of the storage and picking system (1) is formed by or comprises an article storage for the provision of the articles (2a) of the first order part, wherein articles (2a) provided in this article storage can be retrieved from this article storage in accordance with the respective order.

14. The storage and picking system (1) according to claim 12 or 13, **characterized in that** the second subsystem (5) of the storage and picking system (1) is formed by or comprises a production, wherein the production is configured to produce the articles (2b) of the second order part in accordance with the respective order.

15. The storage and picking system (1) according to claim 14, **characterized in that** the production is configured to produce books, shoes, or clothing articles.

16. The storage and picking system (1) according to one of claims 12 to 15, **characterized in that** the first transport system (10) comprises a conveying system configured differently to an overhead conveyor system.

17. The storage and picking system (1) according to one of claims 12 to 16, **characterized in that** the second transport system (12) comprises an overhead conveyor system for the suspended transportation of hanging bags (17).

## Revendications

1. Procédé pour préparer des marchandises (2a, 2b) placées dans des moyens de chargement de commandes (3) dans un système de stockage et de préparation de commandes (1), comprenant les étapes suivantes :
a) enregistrement d'une pluralité de commandes et détermination des marchandises (2a, 2b) comprises dans chaque
commande par un ordinateur de commande (6),
b) détermination d'une première partie de commande, qui comprend une première partie des marchandises (2a) comprises dans la commande respective, qui sont mises à disposition dans un premier sous-système (4), pour chaque commande faisant partie des commandes enregistrées par l'ordinateur de commande (6),
c) détermination d'une deuxième partie de commande, qui comprend une deuxième partie des marchandises (2b) comprises dans la commande correspondante, qui sont mises à disposition dans un deuxième sous-système (5), pour chaque commande faisant partie des commandes saisies par l'ordinateur de commande (6),
d) chargement d'un moyen de chargement de commande (3) attribué à la commande respective avec les marchandises (2a) faisant partie de la première partie respective des commandes dans une première station de préparation de commandes (7),
e) transport des moyens de chargement de commande (3) de la première station de préparation de commandes (7) vers un espace de stockage intermédiaire (9) au moyen d'un premier système de transport (10),
f) stockage intermédiaire des moyens de chargement de commande (3) dans l'espace de stockage intermédiaire (9),
g) évacuation des moyens de chargement de commande (3) hors de l'espace de stockage intermédiaire (9) et acheminement des moyens de chargement de commande (3) vers une deuxième station de préparation de commande (8) au moyen du premier système de transport (10),
h) définition d'une séquence de destination des marchandises, dans laquelle les marchandises (2b) faisant partie des deuxièmes parties des commandes sont mises à disposition au niveau de la deuxième station de préparation de commandes (8) par un dispositif de commande (16), la séquence de destination des marchandises spécifiant une séquence de destination des commandes, dans laquelle les commandes sont traitées au niveau de la deuxième station de préparation de commandes (8),
i) acheminement des marchandises (2b) faisant partie des deuxièmes parties des commandes vers un dispositif de tri (11) au moyen du deuxième système de transport (12),
j) tri des marchandises (2b) faisant partie des deuxièmes parties des commandes dans le dispositif de tri (11) conformément à la séquence de destination des marchandises,
k) évacuation des marchandises (2b) faisant partie des deuxièmes parties des commandes hors du dispositif de tri (11) et acheminement des marchandises (2b) faisant partie des deuxièmes parties des commandes vers la deuxième station de préparation de commandes (8) conformément à la séquence de destination des marchandises, à l'aide du deuxième système de transport (12),
**caractérisé par** l'étape suivante :
1) chargement du moyen de chargement de commande (3) attribué à la commande respective avec les marchandises (2b) faisant partie de la deuxième partie des commandes respective au niveau de la deuxième station de préparation de commandes (8),
le dispositif de commande (16) commandant le premier système de transport (10) et le premier système de transport (10) transportant les moyens de chargement de commande (3) conformément à la séquence de destination de commande prédéfinie afin d'effectuer l'acheminement conformément à l'étape g), et
le dispositif de commande (16) calculant un moment de départ pour l'évacuation conformément à l'étape g) avant que les marchandises (2b) faisant partie des deuxièmes parties des commandes ne soient triées conformément à la séquence de destination des marchandises, et commandant le premier système de transport (10) afin de déclencher l'évacuation conformément à l'étape g) au moment du départ.

2. Procédé selon la revendication 1, **caractérisé en ce que** la deuxième partie de commande est attribuée à une deuxième station de préparation de commandes (8) parmi plusieurs deuxièmes stations de préparation de commandes (8) et cette attribution est utilisée comme spécification pour la première partie de commande.

3. Procédé selon la revendication 1 ou 2, **caractérisé en ce qu'**une commande de mise à disposition des marchandises (2b) faisant partie la deuxième partie de commande est émise lorsque l'étape d) est terminée.

4. Procédé selon l'une des revendications 1 à 3, **caractérisé en ce que** le premier sous-système (4) du système de stockage et de préparation de commandes (1) est formé par un espace de stockage de marchandises ou comprend un tel espace de stockage, et les marchandises (2a) de la première partie de commande sont mises à disposition dans cet espace de stockage de marchandises et sont prélevées dans cet espace de stockage de marchandises en fonction de la commande.

5. Procédé selon l'une des revendications 1 à 4, **caractérisé en ce que** le deuxième sous-système (5) du système de stockage et de préparation de commandes (1) est constitué d'une production ou comprend une telle production et **en ce que** les marchandises (2b) de la deuxième partie de la commande sont fabriquées dans cette production en fonction de la commande.

6. Procédé selon l'une des revendications 1 à 5, **caractérisé en ce que** les marchandises (2b) faisant partie de la deuxième partie de la commande sont transportées, après avoir été prélevées ou produites, vers une étape de pré-tri (13) du dispositif de tri (11) où elles sont pré-triées, puis transportées vers une étape de tri final (14) du dispositif de tri (11) où elles sont triées avant d'être acheminées vers la deuxième station de préparation de commandes (8).

7. Procédé selon la revendication 6, **caractérisé en ce qu'**un acheminement initial du moyen de chargement de commande (3) et des marchandises (2a) faisant partie de la première partie de commande vers la deuxième station de préparation de commande (8) est déclenché lorsque l'étape d) est terminée et que les marchandises (2b) faisant partie de la deuxième partie de la commande sont en stock dans l'étape de pré-tri (13) ou lorsque l'étape d) est terminée et que les marchandises (2b) faisant partie de la deuxième partie de la commande sont en stock à l'étape de tri final (14).

8. Procédé selon l'une des revendications 1 à 7, **caractérisé en ce que** les moyens de chargement de commande (3) sont conçus différemment d'une poche suspendue (17).

9. Procédé selon l'une des revendications 1 à 8, **caractérisé en ce que** le transport des marchandises (2b) faisant partie de la deuxième partie de commande s'effectue à l'aide du deuxième système de transport (12) dans des poches suspendues (17).

10. Procédé selon la revendication 9, **caractérisé en ce qu'**une marchandise (2b) faisant partie de la deuxième partie de commande est transportée dans chaque poche suspendue (17).

11. Procédé selon l'une des revendications 6 à 10, **caractérisé en ce que** les marchandises (2b) faisant partie de la deuxième partie de la commande sont transportées, après un prélèvement ou une production, dans un tampon (15) du système de stockage et de préparation de commandes (1) agencé entre le deuxième sous-système (5) et l'étape de pré-tri (13).

12. Système de stockage et de préparation de commandes (1) pour la préparation de marchandises (2a, 2b) dans des moyens de chargement de commandes (3), comprenant un premier sous-système (4) dans lequel des marchandises (2a) peuvent être mises à disposition,
un deuxième sous-système (5) dans lequel des marchandises (2b) peuvent être mises à disposition,
un ordinateur de commande (6)
i) pour enregistrer une pluralité de commandes et déterminer les marchandises (2a, 2b) comprises dans chaque commande,
ii) pour déterminer une première partie de commande, qui présente une première partie des marchandises (2a) comprises dans la commande respective, qui sont mises à disposition dans le premier sous-système (4) du système de stockage et de préparation de commandes (1), pour chaque commande faisant partie des commandes enregistrées, et
iii) pour déterminer une deuxième partie de commande, qui comprend une deuxième partie des marchandises (2b) comprises dans la commande respective, qui sont mises à disposition dans le deuxième sous-système (5) du système de stockage et de préparation de commandes (1), pour chaque commande qui fait partie des commandes enregistrées, une première station de préparation de commandes (7) pour charger un moyen de chargement de commande (3) associé à la commande respective avec les marchandises (2a) faisant partie de la première partie de commande respective des commandes,
une deuxième station de préparation de commandes (8) pour charger le moyen de chargement de commande (3) attribué à la commande respective avec les marchandises (2b) faisant partie de la deuxième partie de commande respective des commandes,
un espace de stockage intermédiaire (9) pour l'espace de stockage intermédiaire des moyens de chargement de commande (3),
un premier système de transport (10) pour transporter les moyens de chargement de commande (3) de la première station de préparation de commande (7) vers l'espace de stockage intermédiaire (9) et pour évacuer les moyens de chargement de commande (3) hors de l'espace de stockage intermédiaire (9) et acheminer les moyens de chargement de commande (3) vers la deuxième station de préparation de commande (8),
un dispositif de commande (16) pour définir une séquence de destination des marchandises, dans laquelle les marchandises (2b) faisant partie des deuxièmes parties des commandes sont mises à disposition au niveau de la deuxième station de préparation de commandes (8) du système de stockage et de préparation de commandes (1), la séquence de destination des marchandises spécifiant une séquence de destination des commandes dans laquelle les commandes sont traitées au niveau de la deuxième station de préparation de commandes (8),
un dispositif de tri (11) pour trier les marchandises (2b) faisant partie des deuxièmes parties des commandes conformément à la séquence de destination des marchandises, un deuxième système de transport (12) pour acheminer les marchandises (2b) faisant partie des deuxièmes parties des commandes vers le dispositif de tri (11) et pour évacuer les marchandises (2b) faisant partie des deuxièmes parties de commande du dispositif de tri (11) et acheminer les marchandises (2b) faisant partie des deuxièmes parties des commandes vers la deuxième station de préparation de commandes (8) conformément à la séquence de destination des marchandises,
**caractérisé en ce que**
le dispositif de commande (16) est en outre conçu pour commander le premier système de transport (10) pour un transport des moyens de chargement de commande (3) conformément à la séquence de destination de commande prédéfinie, et
calculer un moment de départ pour l'évacuation des moyens de chargement de commande (3) de l'espace de stockage intermédiaire (9) avant que les marchandises (2b) faisant partie des deuxièmes parties des commandes soient triées conformément à la séquence de destination des marchandises, et à commander le premier système de transport (10) afin de déclencher l'évacuation des moyens de chargement des commandes (3) depuis l'espace de stockage intermédiaire (9) au moment du démarrage.

13. Système de stockage et de préparation de commandes (1) selon la revendication 12, **caractérisé en ce que** le premier sous-système (4) du système de stockage et de préparation de commandes (1) est constitué par un espace de stockage de marchandises destiné à la mise à disposition des marchandises (2a) faisant partie de la première partie de la commande ou comprend un tel entrepôt, les marchandises (2a) mises à disposition dans cet entrepôt pouvant être prélevées dans celui-ci en fonction de la commande.

14. Système de stockage et de préparation de commandes (1) selon la revendication 12 ou 13, **caractérisé en ce que** le deuxième sous-système (5) du système de stockage et de préparation de commandes (1) est constitué d'une production ou comprend une telle production, la production étant conçue pour fabriquer les marchandises (2b) faisant partie de la deuxième partie de la commande en fonction de la commande.

15. Système de stockage et de préparation de commandes (1) selon la revendication 14, **caractérisé en ce que** la production est conçue pour la fabrication de livres, de chaussures ou de vêtements.

16. Système de stockage et de préparation de commandes (1) selon l'une des revendications 12 à 15, **caractérisé en ce que** le premier système de transport (10) comprend une technique de convoyage différente d'une technique de convoyage suspendu.

17. Système de stockage et de préparation de commandes (1) selon l'une des revendications 12 à 16, **caractérisé en ce que** le deuxième système de transport (12) comprend une technique de convoyage suspendu pour le transport suspendu de poches suspendues (17).
